# EUROPÄISCHE PATENTSCHRIFT

(11) **EP 0 650 667 B1**
(45) Veröffentlichungstag und Bekanntmachung des Hinweises auf die Patenterteilung: **04.03.1998**
(21) Anmeldenummer: 94116139.0
(22) Anmeldetag: 13.10.1994
(51) Int. Cl.: A22C 25/17

(54) **Vorrichtung zum Gewinnen der Haut von Fischfilets**
Device for obtaining the skin from fish fillets
Dispositif pour obtenir la peau de filets de poissons

(30) Priorität: 03.11.1993 DE 4337478
(43) Veröffentlichungstag der Anmeldung: 03.05.1995
(73) Patentinhaber: NORDISCHER MASCHINENBAU RUD. BAADER GMBH + CO KG, 23560 Lübeck (DE)
(72) Erfinder: Braeger, Horst, D-23560 Lübeck (DE)

(56) Entgegenhaltungen:
- DE-A- 2 343 795
- FR-A- 2 280 322
- FR-A- 2 544 591
- FR-A- 2 627 058
- GB-A- 383 733

## Beschreibung

Die Erfindung betrifft eine Vorrichtung zum Gewinnen der Haut von Fischfilets und geht aus von einer Vorrichtung zum Entfernen der Haut von Fischfilets mit einer angetriebenen, die Hautseite abstützenden Förderfläche, einem Enthäutemesser mit einer im Abstand zu der Förderfläche angeordneten Schneide sowie mit einer in Bewegungsrichtung der Förderfläche hinter der Schneide befindlichen und einen Spalt zu der Förderfläche belassenden Andrückfläche.

Solche Vorrichtungen sind aus dem Stand der Technik in mannigfaltigen Ausführungen bekannt. So finden sich diesem Konstruktionsprinzip folgende Vorrichtungen mit unbeweglichem Messer bspw. in der DE 28 44 241 und mit beweglichem Messer bspw. in der DE 37 00 324, in der das Messer oszillierend angetrieben ist. Dabei finden Förderflächen Verwendung, die in aller Regel von den Mantelflächen von Walzen gebildet werden und mit längs oder schraubenförmig verlaufenden Nuten (z. B. DE 28 44 241 oder DE 31 26 009) oder auch zusätzlich mit Radialnuten (z. B. FR 23 91 039) griffig gemacht sind.

Neben der Aufgabe, einen Kraftschluß zur Förderung des zu enthäutenden Filets zu erzeugen und damit dessen Förderung während des Enthäuteprozesses sicherzustellen, ist bei diesen Ausgestaltungen zu berücksichtigen, daß das Filet ausreichend Gelegenheit hat, insbesondere das vorauslaufende Ende, üblicherweise das Schwanzende, so in der Mantelfläche "einzulagern", daß ein Anschnitt erfolgen kann.

Dabei ist es bekannt, daß dieses letztere Erfordernis dem Wunsch nach einem Enthäuteschnitt mit geringstmöglichem Verlust an Filetfleisch entgegensteht. Das hat seine Ursache darin, daß die Haut im Bereich der Nuten keine Unterstützung hat und daher in diesen Bereichen dem Verdrängungsdruck des Messers ausweichen kann, so daß die Schäldicke an diesen Stellen größer ist als im Bereich der Abstützungen.

Man hat daher mit den verschiedensten Nutformen experimentiert, ohne jedoch zu einem allgemein befriedigenden Ergebnis gekommen zu sein, was insofern in der Natur des Prozesses liegt, als dieser grundsätzlich nur ingangkommt, wenn dafür Sorge getragen ist, daß das Filetende das Enthäutemesser unterläuft.

Nachdem nun mehr und mehr die Fischhaut von der Lederwarenindustrie als wertvoller Rohstoff geschätzt wird, wird beim Einsatz der herkömmlichen Enthäutevorrichtungen ein weiterer Nachteil gravierend. Dieser liegt darin, daß mit deren Verfahrenskonzept eine Strapazierung insbesondere der Außenseite der Fischhaut verbunden ist, die eine Zerstörung des Schuppenkleides, d. h. das den dekorativen Effekt ausmachende Merkmal verloren geht. Diese Zerstörung hat ihre Ursache darin, daß die vergleichsweise wenigen durch die herkömmlich gestaltete Förderfläche dargebotenen Auflagepunkte bzw. -linien eine übermäßig hohe spezifische Belastung erzeugen, so daß die Schuppen bereichsweise abgerissen oder zerdrückt werden. Dazu kommt bei Verwendung eines oszillierend angetriebenen Enthäutemessers als weitere Strapazierungskomponente eine mangelhafte Querstabilisierung des Filets, die eine zusätzliche Belastung dadurch mitsichbringt, daß das Filet einen Teil der Oszillationsbewegung des Enthäutemessers mitmacht.

Es ist daher die Aufgabe der Erfindung eine Vorrichtung zu schaffen, mit der es möglich ist, die Haut von Fischen in ihrem natürlichen Zustand zu gewinnen und dabei einen Enthäuteprozeß zu erzielen, dessen Merkmale ein sicherer Anschnitt und eine an Filetfleisch verlustarme Filetgewinnung sind.

Diese Aufgabe wird bei einer Vorrichtung der eingangs beschriebenen Art dadurch gelöst, daß die Förderfläche durch eine körnige Mineralstruktur, vorzugsweise durch eine Korundauflage, gebildet ist.

Dieser Ausführung liegt die überraschende Erkenntnis zugrunde, daS die Anschnittsicherheit nicht nur von der oben beschriebenen Ausgestaltung der Förderfläche bestimmt wird, sondern auch von ihrer Griffigkeit. Wie sich zeigte, konnte bei extremer Griffigkeit die bisherige, für einen sicheren Anschnitt unumgänglich erachtete Förderflächenstruktur völlig außeracht gelassen werden. Mit der erfindungsgemäßen Ausführung der Förderfläche geht gleichzeitig aufgrund der Vielzahl der Stützpunkte eine derartige Reduzierung der spezifischen Belastung des Schuppenkleides einher, daß jegliche Beschädigung vermieden wird.

Weitere vorteilhafte Merkmale der erfindungsgemäßen Vorrichtung sind den übrigen Unteransprüchen zu entnehmen.

Die Erfindung wird nachstehend anhand eines in der Zeichnung dargestellten Ausführungsbeispiels näher erläutert. Es zeigen
- Fig. 1: eine vereinfachte Teilansicht einer Gesamtvorrichtung in perspektivischer Darstellung,
- Fig. 2: eine Teil-Seitenansicht einer Bauvariante der Vorrichtung in vereinfachter Darstellung,
- Fig. 3: eine Teil-Seitenansicht einer weiteren Bauvariante der Vorrichtung in vereinfachter Darstellung.

In einem nicht dargestellten Gestell einer Vorrichtung zum Enthäuten von Fischfilets sind ein endloser Zuführförderer 1 , eine Hautmitnehmerwalze 2 und ein Andrückschuh 3 angeordnet, der gleichzeitig als Enthäutemesser ausgebildet ist.

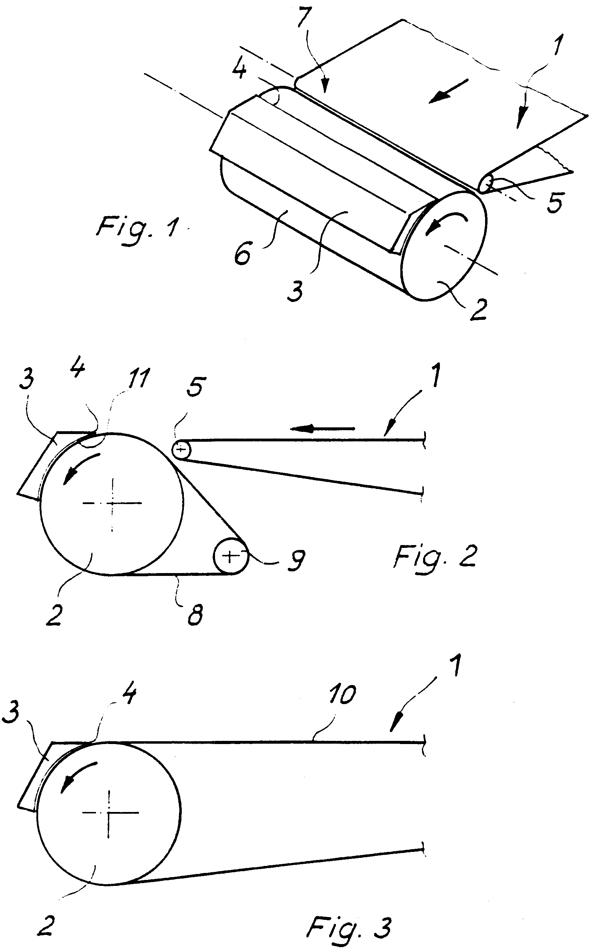

Nach Fig. 1 ist der Zuführförderer 1 separat angeordnet und über eine Umlenkwalze 5 in unmittelbarer Nähe der Hautmitnehmerwalze 2 umgelenkt. Der Fördergurt selber besteht aus einem flexiblen Gurtmaterial mit vorzugsweise geriffelter Oberfläche und die Ausrichtung erfolgt so, daß der Obertrum im wesentlichen tangential an die Hautmitnehmerwalze 2 herangeführt wird. In dieser Ausführung ist die Mantelfläche 6 der Hautmitnehmerwalze 2 erfindungsgemäß mit einem Korundbelag versehen oder die Walze selbst als "Schleifwalze", im Aufbau entsprechend einer üblichen Schleifscheibe, ausgebildet. In der Übergangszone 7 zwischen der Umlenkwalze 5 und der Hautmitnehmerwalze 2 kann eine nicht gezeigte, mit diesen gleichsinnig umlaufend angetriebene überleitwalze angeordnet sein.

Bei der Ausführung nach Fig. 2 ist der Zuführförderer 1 entsprechend Fig. 1 ausgestaltet. Die Hautmitnehmerwalze 2 ist dagegen als einfache Stützwalze ausgebildet. Die Griffigkeit ihrer Mantelfläche wird durch ein korundbeschichtetes Endlosband 8 erzielt, welches unter Umschlingung der Hautmitnehmerwalze 2 und einer Hilfsumlenkung 9 umlaufend geführt ist.

Bei den Ausführungen nach Figuren 1 und 2 wird die Umlaufgeschwindigkeit der Hautmitnehmerwalze 2 gegenüber der Vorschubgeschwindigkeit des Zuführförderers 1 um bspw. 5 bis 10 % höher gewählt, um Stauchungen der Fischfilets im Übergang auf die hochgriffige Hautmitnehmerwalze 2 bzw. das korundbeschichtete Endlosband 8 zu vermeiden.

Bei der Ausführung nach Fig. 3 schließlich bildet der Zuführförderer 1 die Mantelfläche der Hautmitnehmerwalze 2 , zu welchem Zweck der Zuführförderer als Fördergurt ausgebildet und um diese herumgeführt ist und an seiner Förderfläche 10 mit einer Korundauflage beschichtet ist.

Die erforderliche Reinigbarkeit der erfindungsgemäßen Vorrichtung läßt sich dadurch erreichen, daß insbesondere die korundbeschichteten Elemente auf leichte Weise ausbaubar gestaltet sind, so daß eine Lagerung dieser Elemente in einer Desinfektionslösung möglich ist.

In Funktion wird das Fischfilet mit der Hautseite auf dem Zuführförderer aufliegend in den Bereich der Hautmitnehmerwalze 2 und von dieser gegen das Enthäutemesser gefördert. Dabei wird die Haut unter die Andrückfläche 11 gedrängt und mit fortschreitendem Eindringen in den Spalt zwischen dieser und der Mantelfläche 6 der Hautmitnehmerwalze 2 das Filetfleisch über den Messerrücken geleitet. Die Andrückfläche 11 wirkt dabei so, daß die Außenseite der Haut gegen den Korundbelag der Mantelfläche 6 gedrückt wird und damit durch die Vielzahl der Kontaktpunkte zwischen fördernder Fläche und Haut ein die Hautoberfläche schonender Trennvorgang gewährleistet ist.

### Bezugszeichenliste

- 1: Zuführförderer
- 2: Umlenkwalze (Hautmitnehmerwalze)
- 3: Andrückschuh
- 4: Schneide
- 5: Umlenkwalze (Enthäutewalze)
- 6: Förderfläche (Mantelfläche)
- 7: Übergangszone
- 8: Förderfläche (Endlosband)
- 9: Umlenkwalze (Hilfsumlenkung)
- 10: Förderfläche
- 11: Andrückfläche

## Patentansprüche

1. Vorrichtung zum Gewinnen der Haut von Fischfilets mit einer angetriebenen, die Hautseite abstützenden Förderfläche (6, 8, 10) , einem Enthäutemesser mit einer im Abstand zu der Förderfläche angeordneten Schneide (4) sowie mit einer in Bewegungsrichtung der Förderfläche (6, 8, 10) hinter der Schneide (4) befindlichen und einen Spalt zu der Förderfläche belassenden Andrückfläche (11) , **dadurch gekennzeichnet,** daß die Förderfläche (6, 8, 10) durch eine körnige Mineralstruktur gebildet ist.

2. Vorrichtung nach Anspruch 1 , **dadurch gekennzeichnet,** daß die Förderfläche (6, 8, 10) durch eine Korundauflage gebildet ist.

3. Vorrichtung nach Anspruch 1 oder 2 , **dadurch gekennzeichnet,** daß die Förderfläche (6) durch die Mantelfläche einer Walze (2) gebildet ist.

4. Vorrichtung nach Anspruch 1 oder 2 , **dadurch gekennzeichnet,** daß die Förderfläche (8) durch ein umlaufend angetriebenes, endloses und um mindestens zwei Umlenkwalzen (2, 9) umgelenktes Band gebildet ist, wobei das Enthäutemesser und die Andrückfläche (11) im Umschlingungsbereich der Umlenkwalze (2) angeordnet sind.

5. Vorrichtung nach einem der Ansprüche 1 bis 3 , **dadurch gekennzeichnet,** daß die Förderfläche (10) durch einen endlosen, gleichzeitig als Zuführförderer (1) dienenden Fördergurt gebildet ist, welcher um die Umlenkwalze (2) umgelenkt ist, wobei das Enthäutemesser und die Andrückfläche (11) im Umschlingungsbereich der Umlenkwalze (2) angeordnet sind.

## Claims

1. Device for obtaining the skin of fish fillets comprising a driven conveying surface (6, 8, 10) supporting the skin side, a skinning knife with cutting a edge (4) arranged at a spacing relative to the skinning surface, as well as a presser surface (11) disposed behind the cutting edge (4) in the movement direction of the conveying surface (6, 8, 10) and leaving a gap to the conveying surface, characterised thereby that the conveying surface (6, 8, 10) is formed by a grained mineral structure.

2. Device according to claim 1, characterised thereby that the conveying surface (6, 8, 10) is formed by a corundum deposit.

3. Device according to claim 1 or 2, characterised thereby that the conveying surface (6) is formed by the circumferential surface of a roller (2).

4. Device according to claim 1 or 2, characterised thereby that the conveying surface (8) is formed by an endless belt which is driven to circulate and is deflected around at least two deflecting rollers (2, 9), wherein the skinning knife and the presser surface (11) are arranged in the looping region of the deflecting roller (2).

5. Device according to claim 1 or 2, characterised thereby that the conveying surface (10) is formed by an endless conveyor belt which simultaneously serves as a feed conveyor (1) and which is deflected around the deflecting roller (2), wherein the skinning knife and the presser surface (11) are arranged in the looping region of the deflecting roller (2).

## Revendications

1. Dispositif destine à retirer la peau de filets de poissons, comprenant une surface de transport (6, 8, 10) entraînée et supportant le côté peau, un couteau à dépouiller la peau présentant un tranchant de coupe (4) disposé a distance de la surface de transport, ainsi qu'une surface d'application (11) qui se trouve après le tranchant de coupe (4) en se référant à la direction du mouvement de la surface de transport (6, 8, 10), et qui laisse libre un interstice par rapport à la surface de transport,
caractérisé en ce que la surface de transport (6, 8, 10) est formée par une structure minérale granulaire.

2. Dispositif selon la revendication 1, caractérisé en ce que la surface de transport (6, 8, 10) est formée par un revêtement de corindon.

3. Dispositif selon la revendication 1 ou 2, caractérisé en ce que la surface de transport (6) est formée par la surface périphérique d'un cylindre (2).

4. Dispositif selon la revendication 1 ou 2, caractérisé en ce que la surface de transport (8) est formée par une bande sans fin entraînée en révolution et guidée sur au moins deux cylindres de renvoi (2, 9), le couteau à dépouiller la peau et la surface d'application (11) étant disposés dans la zone d'enroulement sur le cylindre de renvoi (2).

5. Dispositif selon l'une des revendications 1 à 3, caractérisé en ce que la surface de transport (10) est formée par une courroie de transport sans fin, qui sert simultanément de transporteur d'alimentation (1), et qui est guidée autour du cylindre de renvoi (2), le couteau à dépouiller la peau et la surface d'application (11) étant disposés dans la zone d'enroulement sur le cylindre de renvoi (2).
